Europäisches Patentamt

European Patent Office

Office européen des brevets

(11) Veröffentlichungsnummer: **0 258 562 B1**

# EUROPÄISCHE PATENTSCHRIFT

(45) Veröffentlichungstag der Patentschrift: **23.10.91**

(51) Int. Cl.⁵: **H02K 11/00**

(21) Anmeldenummer: **87109291.2**

(22) Anmeldetag: **27.06.87**

(54) **Schmelzsicherung, insbesondere für Elektromotore.**

(30) Priorität: **07.08.86 DE 3626770**

(43) Veröffentlichungstag der Anmeldung:
**09.03.88 Patentblatt 88/10**

(45) Bekanntmachung des Hinweises auf die
Patenterteilung:
**23.10.91 Patentblatt 91/43**

(84) Benannte Vertragsstaaten:
**DE ES FR IT**

(56) Entgegenhaltungen:
**BE-A- 356 769**     **DD-C-12 073 5**
**DE-C- 394 013**    **FR-A- 561 939**
**FR-A- 920 344**    **US-A- 2 376 863**

(73) Patentinhaber: **Braun Aktiengesellschaft**
**Rüsselsheimer Strasse 22**
**W-6000 Frankfurt/Main(DE)**

(72) Erfinder: **Zimmermann, Walter**
**Roda 3 St. Cugat del Valles**
**Barcelona(ES)**

Rank Xerox (UK) Business Services

## Beschreibung

Die Erfindung betrifft einen Elektromotor mit einer Schmelzsicherung nach dem Oberbegriff des Patentanspruchs 1.

Schmelzsicherungen im Versorgungsstromkreis von Elektromotoren sind seit langem bekannt. Sie sorgen für eine Unterbrechung der Spannungsversorgung des Elektromotors, sobald dessen Stromaufnahme einen maximal zulässigen Wert überschreitet und es dadurch zu dessen Überhitzung kommt. Derartige Schmelzsicherungen arbeiten in Abhängigkeit der Temperatur, die von einem Fühler an einem vor Überhitzung zu schützenden Bauteil des Elektromotors, im allgemeinen ist dies die Stator- und/oder die Rotorwicklung, gemessen wird.

So ist beispielsweise aus der US 2,376,863 eine Schmelzsicherung für einen Elektromotor bekannt, dessen Statorgehäuse Wicklungen aufweist, deren Temperatur durch einen gut wärmeleitenden Fühler überwacht wird. Der Fühler überträgt die vom Elektromotor erzeugte Wärme teilweise auf eine bei Normalbetriebsbedingungen des Elektromotors feste Masse, die aber durch den bei Überlast übertragenenen Wärmefluß zum Schmelzen gelangt. In die schmelzfähige Masse ist ein Ende eines spulenförmig ausgebildeten Spannungsversorgungskabels des Elektromotors eingelassen, wobei die Masse selbst einen Teil der elektrischen Zuführungsleitung bildet. Da dieses Ende des Spannungsversorgungskabels dauernd unter der Wirkung einer von einer Feder ausgehenden Speicherkraft steht, wird es Verlauf des Schmelzprozesses von der Feder aus der Masse herausgerissen und damit die Spannungsversorgung des Elektromotors unterbrochen.

Neben der Tatsache, daß der elektrische Kontaktschluß für die Spannungsversorgung auf Grund des beschriebenen Wirkungsprinzips der Schmelzsicherung mechanisch recht kompliziert aufgebaut werden muß, weist diese bekannte Schmelzsicherung den Nachteil auf, daß es recht umständlich ist, diese nach einem Schmelzen der Masse wieder betriebsfähig zu machen, da dazu nicht einfach nur ein leicht ersetzbares Einzelteil ausgewechselt sondern auf umständliche und teure Weise die gesamte Schmelzsicherung ausgetauscht werden muß. Ebenso umständlich wäre es die schmelzfähige Masse durch einen Lötkolben oder dergleichen erneut zu schmelzen und bis zu deren Erstarrung das wieder in die Masse einzubettende spulenförmige Ende des Spannungsversorgungskabels zur Entlastung von der an ihm angreifenden Federkraft zu haltern.

Aus der BE-A-356 769 ist eine weitere Schmelzsicherung für einen Elektromotor bekannt, bei deren Ansprechen von einem Schalter ein Stromkreis geschlossen wird und dadurch ein akustisches Signal abgegeben wird. Dabei besteht der Schalter aus zwei gegeneinander beweglichen Schenkeln, an denen die beiden in Berührung zu bringenden Kontaktflächen des Schalters ausgebildet sind. Die beiden Schenkel können sich aber erst nach dem Wegschmelzen einer sie auf Abstand haltenden schmelzfähigen Masse unter dem Einfluß einer zwischen ihnen wirkenden Speicherkraft soweit aufeinander zubewegen, daß die Kontaktflächen in Berührung kommen und aufgrund der Wirkung der Speicherkraft auch in Berührung bleiben.

Auch die aus der BE-A-356 769 bekannten Schmelzsicherung kann nach ihrem Ansprechen aus den bereits im Zusammenhang mit der in der US-A-2,376,863 beschriebenen Schmelzsicherung genannten Gründen nur mit relativ großem Aufwand wieder betriebsfähig gemacht werden. Weiterhin weist auch diese bekannte Schmelzsicherung den Nachteil auf, daß sie - ebenso wie die aus der US-A-2376863 bekannte Schmelzsicherung - sich relativ träge verhält, wenn es zu einem schnellen Anstieg der Temperatur des zu überwachenden Bauteils des Elektromotors kommt. Der Grund dafür liegt bei beiden vorbekannten Schmelzsicherungen darin, daß das schmelzfähige Bauteil der Schmelzsicherung thermisch über geometrisch relativ ausgedehnte Wärmebrücken an das zu überwachende Bauteil des Elektromotors gekoppelt ist. Die Übertragung des Wärmeflusses auf das schmelzfähige Bauteil bei einer extremen thermischen Belastung des Elektromotors kann daher sogar zu lange dauern, um diesen noch vor einer Beschädigung zu schützen.

Es ist daher Aufgabe der Erfindung, eine schnell auf eine unzulässige Erwärmung des Elektromotors ansprechende Schmelzsicherung zu schaffen, die darüber hinaus nach ihrem Ansprechen auf einfache Weise wieder betriebsbereit gemacht werden kann.

Diese Aufgabe wird für eine Schmelzsicherung nach dem Oberbegriff des Patentanspruchs 1 durch die im kennzeichnenden Teil dieses Patentanspruchs aufgeführten Merkmale gelöst.

Dadurch, daß der Fühler gleichzeitig auch das bei einer unzulässigen Temperaturerhöhung des Elektromotors schmelzende, ansonsten aber formfeste Bauteil der Schmelzsicherung bildet, ergibt sich ein außerordentlich schnelles Ansprechen der Schmelzsicherung auch dann, wenn am Elektromotor ein extrem schneller Temperaturanstieg eintritt. Ein weiterer Vorteil der erfindungsgemäßen Schmelzsicherung besteht darin, daß der Fühler Bestandteil eines am Elektromotor gelagerten, auswechselbaren Hebels ist, der bei einem Schmelzen des Fühlers aus seiner Ausgangsstellung in seine das Öffnen des Schalters bewirkende Stellung gelangt. Nach einem Ansprechen der Schmelzsicherung müssen nämlich lediglich der am Elektromotor gelagerte Hebel ausgewechselt und keine Lötoder Schweißarbeiten durchgeführt werden, um die Schmelzsicherung wieder betriebsbereit zu machen.

Stehen nach Anspruch 2 die Schwenkebene des Hebels und die durch eine Bewegung des federnden Schaltelements definierte Ebene senkrecht aufeinander, so ergibt sich ein besonders einfacher mechanischer Aufbau der erfindungsgemäßen Schmelzsicherung. Es ergeben sich nämlich bei einer derartigen Anordnung äußerst kurze Betätigungswege zur Auslösung der Schmelzsicherung.

Bildet man die erfindungsgemäße Schmelzsicherung nach Anspruch 3 weiter, das heißt, stellt man den Hebel und den Fühler einstückig aus Kunststoff her, so ist der Fühler besonders zum einen leicht montierbar, da er lediglich in seine Gelenkachse "eingeklipst" zu werden braucht und zum anderen auch äußerst kostengünstig herstellbar.

Bildet man das federnde Schaltelement nach dem Patentanspruch 4 weiter, so lassen sich dieselben Schaltglieder verwenden, die bereits für das Ein- und Ausschalten des Motors benutzt werden. Dadurch läßt sich bei einer Serienproduktion eine erhebliche Kosteneinsparung erzielen.

Der Gegenstand der Erfindung ist nachstehend anhand der Zeichnung in einem Ausführungsbeispiel näher erläutert. Es zeigen:

Fig. 1 eine Ansicht der Stirnseite des die erfindungsgemäße Schmelzsicherung enthaltenden Elektromotors,

Fig. 2 eine den Aufbau und die Lagerung der erfindungsgemäßen Schmelzsicherung am Stator des Elektromotors zeigende Funktionsskizze und

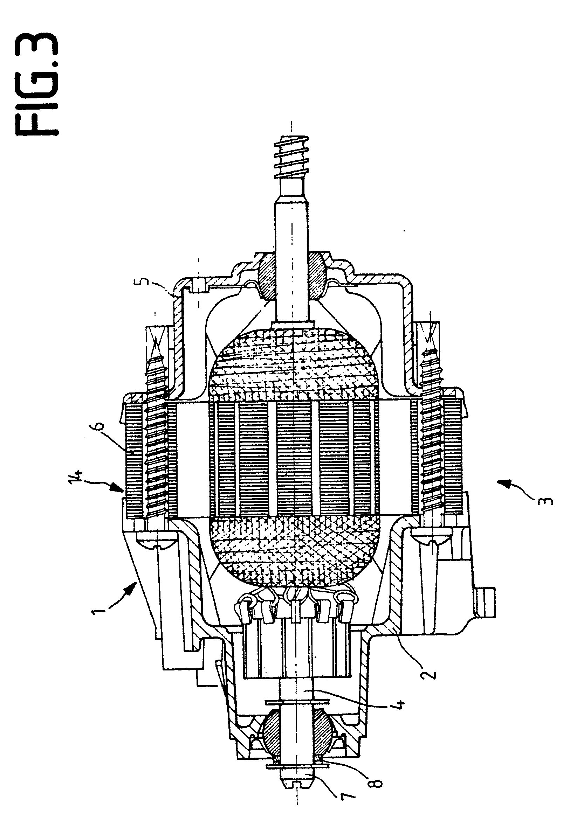

Fig. 3 einen Längsschnitt durch den in Fig. 1 dargestellten Elektromotor.

Wie die Figuren erkennen lassen, ist die erfindungsgemäße Schmelzsicherung 1 dem stirnseitigen (kappenförmigen) Gehäuseteil 2 eines Elektromotors 3 zugeordnet. Zwischen dem Gehäuseteil 2 und einem in Richtung der Motorachse 4 dahinter angeordneten, deshalb hier nicht sichtbaren, zweiten Gehäuseteil 5 ist der Stator 6 des Elektromotors 3 befestigt. Dem Gehäuseteil 2, wie auch dem zweiten Gehäuseteil 5 , ist ein die Rotorwelle 7 aufnehmendes Lager 8 zugeordnet

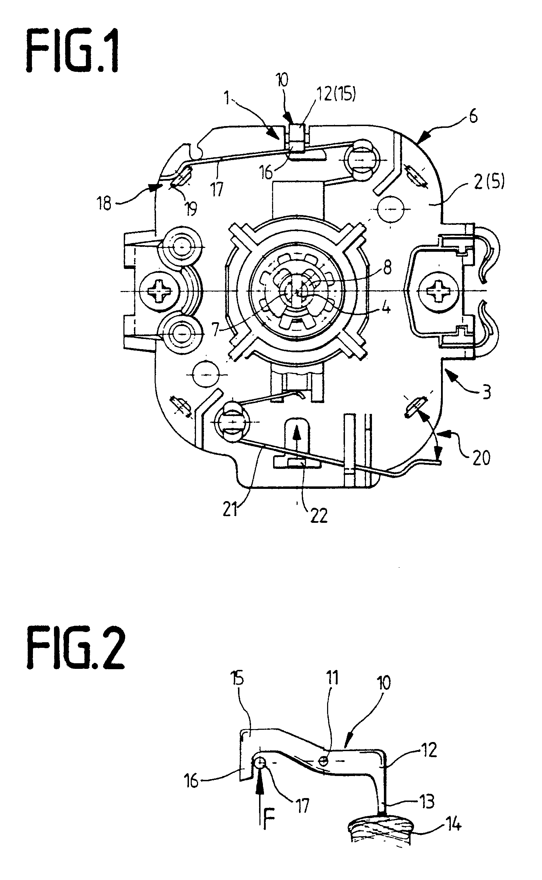

Die Schmelzsicherung 1 gemäß der Erfindung besteht aus einem am Stator 6 gelagerten, doppelarmigen Hebel 10, der um eine rechtwinklig zur Motorachse 4, also in der Zeichnung nach Fig. 1 von links nach rechts verlaufende Gelenkachse 11, schwenkt. Der antreibende (erste) Hebelarm 12 des Hebels 10 dient als Halter für einen Fühler 13, der an der Statorwicklung 14 des Elektromotors 3, beispielsweise durch die Speicherkraft F des federnden Schaltelements 17, ständig auf Anlage gehalten wird. Der Fühler 13 besteht hier aus bei unzulässiger Erwärmung der Statorwicklung 14 schmelzendem Material und bildet somit ein auslösendes Element der erfindungsgemäßen Schmelzsicherung.

Der die Antriebsfunktion ausübende (zweite) Hebelarm 15 des Hebels 10 weist ein hakenförmiges Endstück 16 auf, an dem das hier beispielsweise aus Federdraht gebildete, selbstfedernde Schaltelement 17 mit der Vorspannung F anliegt. Der Federarm 17 ist Bestandteil einer im Versorgungsstromkreis des Elektromotors 3 liegenden Schenkelfeder, die die Ein- und Ausschaltfunktion des Schalters 18 bewirkt. Das hakenförmige Endstück 16 des Hebels 10 hält in dieser seiner Ausgangsstellung gegen die Vorspannkraft F das federnde Schaltelement 17 in ständiger Anlage am gerätefesten Gegenkontakt 19 des Schalters 18 und damit denselben in seiner Einschaltstellung.

Der steuernde Hebel 10 erfüllt die Funktion eines Übertragungsgliedes, welches das Schmelzen des Fühlers 13 auf den Schalter 18 durch dessen Überführung in die Ausschaltstellung überträgt. Schmilzt der Fühler 13 durch unzulässige Erwärmung der Statorwicklung 14 des Elektromotors 3, so schwenkt der Hebel 10 infolge nachlassender Festigkeit des Fühlermaterials gemäß Fig. 2 im Uhrzeigersinn, so daß das hakenförmige Endstück 16 des Hebelarmes 15 von dem federnden Schaltelement 17 in der Zeichnung nach Fig. 1 und 2 nach oben bewegt wird und vom festen Gegenkontakt 19 abhebt und somit der im Versorgungsstromkreis des Elektromotors 3 liegende Schalter 18 in seine Offenstellung gelangt und den Versorgungsstromkreis des Elektromotors 3 öffnet. Der Motor 3 ist sonach ausgeschaltet. Der Gefahr eines Durchbrennens der Statorwicklung des Motors 3 wird demzufolge mit Hilfe der erfindungsgemäßen Schmelzsicherung mit Sicherheit vorgebeugt.

An dem Gehäuseteil 2 ist ein weiterer Schalter 20 ausgebildet, der dem Schalter 18 entspricht, aber ohne Schmelzsicherung versehen ist. Das federnde Schaltelement 21 entspricht dem Schaltelement 17. Zum Betätigen des Schalters 20 drückt eine mit einem Deckel (nicht dargestellt), der beispielsweise Teil einer Zerkleinerungsmaschine oder eines Entsafters ist, verbundene Betätigungsstange 22 das Schaltelement 21 in der Zeichnung nach Fig. 1 nach oben, bis der Schalter 20 kontaktiert ist. Hierdurch wird erreicht, daß diese Küchenmaschine oder ein sonstiges Elektrogerät nur dann in Betrieb gesetzt werden kann, wenn der Deckel die Zerkleinerungseinrichtung, beispielsweise eine Schneideinrichtung, sicher verschlossen hat, also ein Eingriff von Hand in diesen Gefahrenbereich mit Sicherheit ausgeschlossen ist.

Patentansprüche

1. Schmelzsicherung für einen Elektromotor, dessen Versorgungsspannung bei seiner unzulässigen Erwärmung von der über einen Fühler (13) in gutem thermischen Kontakt mit dem Elektromotor stehenden Schmelzsicherung (1) dadurch unterbrochen wird, daß ein ansonsten formfestes Bauteil der Schmelzsicherung (1) sich über seine Schmelztemperatur erhitzt, somit schmilzt und infolgedessen schließlich ein die Versorgungsspannung steuernder Schalter (18) betätigt wird, weil an ihm erst nach dem Schmelzen des Bauteils eine in seine Betätigungsrichtung gerichtete, mechanische Speicherkraft (F) wirksam werden kann,
**dadurch gekennzeichnet,**
daß der Fühler (13) gleichzeitig auch das schmelzfähige Bauteil der Schmelzsicherung (1) und das Ende eines ersten Hebelarms (12) eines am Elektromotor drehbar gelagerten, auswechselbaren Hebels (10) bildet, daß weiter die Schmelzsicherung (1) ein federnd ausgebildetes, die Speicherkraft (F) ausübendes Schaltelement (17) aufweist, welches zusammen mit einem am Elektromotor angeordneten Gegenkontakt (19) einen elektrischen Schalter (18) bildet und gegen den zweiten Hebelarm (15) des Hebels (10) anliegt und mit dem Hebel (10) mechanisch so zusammenwirkt, daß der Fühler (13) bei Fühlertemperaturen unterhalb seiner Schmelztemperatur gegen den Elektromotor gedrückt wird und der zweite Hebelarm (15) des Hebels (10) das Schaltelement (17) in einer solchen Lage hält, daß der Schalter (18) geschlossen ist, daß aber nach einem Wegschmelzen des Fühlers (13) der zweite Hebelarm (15) sich unter der Wirkung der Speicherkraft (F) derart bewegt, daß sich der Schalter (18) öffnet.

2. Schmelzsicherung nach Anspruch 1,
**dadurch gekennzeichnet,**
daß der Hebel (10) so am Elektromotor gelagert ist, daß seine durch seine Gelenkachse (11) bestimmte Schwenkebene senkrecht zu der von dem federnden Schaltelement (17) bei seiner Bewegung definierten Ebene verläuft.

3. Schmelzsicherung nach Anspruch 2,
**dadurch gekennzeichnet,**
daß der Hebel (10) und Fühler (13) einstückig aus Kunststoff hergestellt sind.

4. Schmelzsicherung nach Anspruch 3,
**dadurch gekennzeichnet,**
daß das federnde Schaltelement aus einer am Elektromotor gelagerten Schenkelfeder (17) besteht, deren eines Ende den Gegenkontakt (19) des Schalters (18) bildet und die im Bereich zwischen dem Gegenkontakt (19) und ihrem Lagerpunkt am Elektromotor von einem hakenförmigen Endstück (16) des zweiten Hebelarms (15) des zweiarmigen Hebels (10) umgriffen wird.

Claims

1. A fuse for an electric motor, the supply voltage of which, in the event of undue motor heating, will be interrupted by the fuse (1) being in good thermal contact with the electric motor via a sensor (13), such interruption being performed in such a fashion that an otherwise non-deformable structural part of the fuse (1) heats in excess of its melting temperature and hence is melting, in consequence whereof finally a switch (18) controlling the supply voltage is actuated because a stored mechanical force (F) directed in its direction of actuation can become effective on it only after melting of the structural part,
**characterized** in that the sensor (13) simultaneously forms the fusible structural part of the fuse (1) and the end of a first lever arm (12) of an exchangeable lever (10) which is privotably mounted on the electric motor, in that furthermore the fuse (1) comprises a resiliently designed switching memmber (17) which exerts the stored force (F), which along with a mating contact (19) arranged on the electric motor forms an electric switch (18) and bears against the second lever arm (15) of the lever (10) and cooperates mechanically with said lever (10) in such a manner that the sensor (13) is pressed against the electric motor at temperatures of the sensor below its melting temperature and the second lever arm (15) of the lever (10) retains the switching member (17) in a position such that the switch (18) is closed, yet that after melting away of the sensor (13) the second lever arm (15) moves under the effect of the stored force (F) such as to cause opening of the switch (18).

2. A fuse as claimed in claim 1,
**characterized** in that the lever (10) is mounted on the electric motor such that its tilting plane determined by its pivot axis (11) extends perpendicular relative to the plane which is defined by the resilient switching member (17) as it moves.

3. A fuse as claimed in claim 2,
**characterized** in that the lever (10) and the sensor (13) are made of plastics in one piece.

4. A fuse as claimed in claim 3, **characterized** in that the resilient switching member is constituted by a leg spring (17) mounted on the electric motor, the one end thereof forming the mating contact (19) of the switch (18), and the said spring, in the area between the mating contact (19) and its point of support on the electric motor, being embraced by a hook-shaped end (16) of the second lever arm (15) of the two-armed lever (10).

**Revendications**

1. Dispositif de protection fusible pour un moteur électrique, dont la tension d'alimentation est interrompue en cas d'échauffement excessif d'un dispositif de protection fusible (1) se trouvant en bon contact thermique avec le moteur électrique par l'intermédiaire d'un capteur (13) par le fait qu'un élément solide à l'état ordinaire du dispositif de protection fusible (1) est portée au-delà de sa température de fusion, fond donc et actionne finalement un commutateur (19) commandant la tension d'alimentation du fait qu'une force mécanique accumulée (F), dirigée dans la direction de l'actionnement, ne peut s'exercer sur lui qu'après la fusion de l'élément, caractérisé en ce que le capteur (13) constitue en même temps l'élément fusible du dispositif de protection fusible (1) et l'extrémité d'un premier bras de levier (12) d'un levier (10) interchangeable monté pivotant sur le moteur électrique, en ce que en outre le dispositif de protection fusible (1) présente un élément élastique de commutation (17) exerçant la force accumulée (F) qui, avec un contact conjugué (19) solidaire du moteur électrique, forme un commutateur électrique (18), qui repose contre le second bras de levier (15) du levier (10) et qui interagit mécaniquement avec le levier (10) de manière à ce que le capteur (13), lorsqu'il est à des températures inférieures à sa température de fusion, est appuyé contre le moteur électrique et à ce que le second bras de levier (15) du levier (10) maintient l'élément élastique de commutation (17) dans une position telle que le commutateur (18) est fermé, mais à ce que, après disparition par fusion du capteur (13), le second bras de levier (15), sous l'effet de la force accumulée (F), se déplace de manière à ouvrir le commutateur (18).

2. Dispositif de protection fusible selon la revendication 1, caractérisé en ce que le levier (10) est monté sur le moteur électrique de manière à ce que le plan de basculement défini par son axe d'articulation (11) soit perpendiculaire au plan défini par le mouvement de l'élément élastique de commutation (17).

3. Dispositif de protection fusible selon la revendication 2, caractérisé en ce que le levier (10) et le capteur (13) sont fabriqués en matière plastique d'une seule pièce.

4. Dispositif de protection fusible selon la revendication 3, caractérisé en ce que l'élément élastique de commutation est constitué d'un bras de ressort (17) monté sur le moteur électrique dont l'une des extrémités forme le contact conjugué (19) du commutateur (18) et qui est fixé en place entre le contact conjugué (19) et son point d'articulation sur le moteur électrique par une extrémité (16) en forme de crochet du second bras de levier (15) du levier (10).

# FIG.1

# FIG.2

FIG.3

EP 0 258 562 B1